# EUROPEAN PATENT APPLICATION

(11) **EP 4 831 506 A1**
(43) Date of publication of application: **28.10.2026**
(21) Application number: 24907462.6
(22) Date of filing: 18.12.2024
(51) Int. Cl.: F16G 5/06, F16G 5/20, F16H 9/18

(54) **V-BELT FOR TRANSMISSION AND BELT TRANSMISSION MECHANISM**

(30) Priority: 21.12.2023 JP 2023215734; 27.11.2024 JP 2024206743
(71) Applicant: Mitsuboshi Belting Ltd., Kobe-shi, Hyogo 653-0024 (JP)
(72) Inventor: NASHIRO Tsuyoshi, Kobe-shi, Hyogo 653-0024 (JP); MIKI Atsushi, Kobe-shi, Hyogo 653-0024 (JP)
(74) Representative: Hoffmann Eitle
(86) International application number: PCT/JP2024/044836
(87) International publication number: WO 2025/135078

(57) **Abstract**

The present invention relates to a V-belt for transmission, said V-belt comprising a core wire which is formed from a Lang's lay cord obtained by combining and twisting a plurality of preliminarily twisted strands that contain aramid fibers, and which has a total fineness of 1000-3500 dtex.

## Description

### TECHNICAL FIELD

The present invention relates to a V-belt for power-transmission for a small belt continuously variable transmission and the like, and a belt power-transmission system including the V-belt for power-transmission.

### BACKGROUND ART

A power-transmission belt used in a power-transmission system of a mechanical device or the like is broadly classified into a frictional power-transmission belt and a synchronous power-transmission belt based on a form of power transmission. As the frictional power-transmission belt, a V-belt, a V-ribbed belt, and a flat belt are known, and as the synchronous power-transmission belt, a toothed belt is known.

One example of the V-belt is a raw edge type belt (raw edge V-belt) in which a frictional power-transmission surface (V-shaped side surface) is an exposed rubber layer. Examples of the raw edge type belt include a raw edge V-belt in which cogs are not provided, and a cogged V-belt such as a raw edge cogged V-belt in which cogs are provided only on an inner circumferential surface of the belt to improve bendability, and a raw edge cogged V-belt (raw edge double cogged V-belt) in which cogs are provided on both an inner circumferential surface and an outer circumferential surface of the belt to improve bendability.

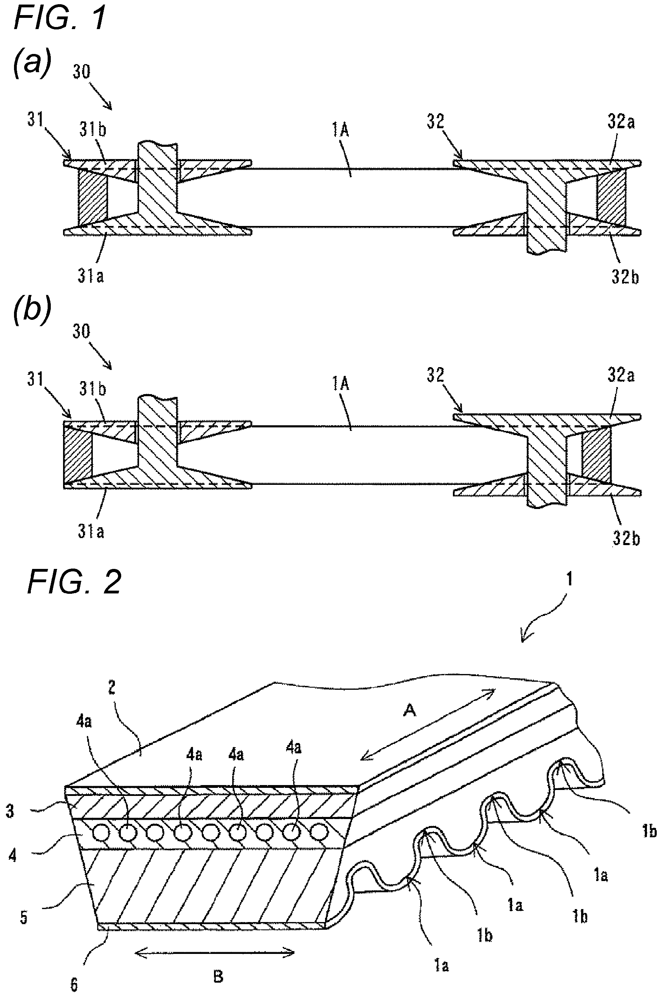

An example of an application of these V-belts (in particular, raw edge cogged V-belt) is a belt continuously variable transmission. As illustrated in FIG. 1, a belt continuously variable transmission 30 is a device in which a V-belt 1A is wound around a driving pulley 31 and a driven pulley 32 to continuously change a gear ratio. The pulleys 31 and 32 respectively have fixed sheaves 31a and 32a which are fixed or restrained from movement in an axial direction, and movable sheaves 31b and 32b which are movable in the axial direction, and each of the pulleys 31 and 32 has a structure in which a width of a V-shaped groove of each of the pulleys 31 and 32 formed by the fixed sheaves 31a and 32a and the movable sheaves 31b and 32b can be continuously changed. Both end surfaces in a width direction of the V-belt 1A are formed into tapered surfaces each having an inclination corresponding to opposing surfaces of the V-shaped grooves of the pulleys 31 and 32, and are engaged at any positions in a pulley radial direction according to adjusted widths of the V-shaped grooves. For example, when a state illustrated in (a) of FIG. 1 is changed to a state illustrated in (b) of FIG. 1 by decreasing the width of the V-shaped groove of the driving pulley 31 and increasing the width of the V-shaped groove of the driven pulley 32, the V-belt 1A moves toward an outer circumferential side in the pulley radial direction on a driving pulley 31 side and moves toward an inner circumferential side in the pulley radial direction on a driven pulley 32 side, and a radius of winding of the belt around the respective pulleys 31 and 32 is continuously adjusted, making it possible to continuously adjust the gear ratio.

In order to accommodate not only winding and rotation running between two shafts of the driving pulley and the driven pulley, but also movement in the pulley radial direction and a repeated bending action due to a continuous change in the radius of winding, the V-belt (variable speed belt) used in such an application requires high lateral pressure resistance (high rigidity in width direction) to reduce belt deformation caused by a lateral pressure from the pulleys, high bendability (low bending rigidity) to allow for a small radius of winding around the pulleys, and low elongation (high elongation rigidity) to reduce a slip and achieve a desired gear ratio.

As a proposal for these requirements, JP2010-196888A (Patent Literature 1) discloses a belt for power-transmission in which a compression rubber layer includes two layers, that is, an upper layer close to a cord and a lower layer on an inner circumferential surface side, the hardness of the upper layer is 93 to 99, and the hardness of the lower layer is 80 to 88. This patent literature also describes that when an upper width of the belt is defined as W and a thickness of the belt is defined as T, a relationship thereof may be 0.3W ≤ T ≤ 0.6W. Further, this patent literature describes such effects of the invention that deformation resistance of the belt is improved due to the upper layer with high hardness, bending fatigue resistance is excellent and cracking becomes less likely to occur due to the lower layer with low hardness, and deformation during bending is minimized to reduce the occurrence of the cracking by reducing the thickness of the belt.

As an object of providing a double cogged V-belt having excellent bending fatigue resistance without accelerating fatigue of a cord made of a para-aramid fiber, JP2005-265106A (Patent Literature 2) discloses a double cogged V-belt in which a cord made of a para-aramid fiber is provided, a belt bending rigidity is 600 N/mm³ to 1200 N/mm³, and a dynamic compressive spring constant in a belt width direction is 15000 N/mm or more.

JP2014-209029A (Patent Literature 3) discloses a belt for power-transmission in which a cord is made of an aramid fiber, a strain when compressed under a stress of 2.0 N/mm² in a width direction is 0.5% to 0.8%, and a strain when pulled under a load of 2 kN in a length direction is 0.35% to 0.7%. This patent literature describes such effects of the invention that a rigidity in a belt width direction is slightly lower and elongation in a belt longitudinal direction is slightly greater than those of a belt in the related art, so that even if significant misalignment occurs during gear shifting, the occurrence of popping out, where the cord protrudes from a belt main body, is reduced.

### CITATION LIST

### PATENT LITERATURE

Patent Literature 1: JP2010-196888A
Patent Literature 2: JP2005-265106A
Patent Literature 3: JP2014-209029A

### SUMMARY OF INVENTION

### TECHNICAL PROBLEM

Although configurations of the belts disclosed in Patent Literatures 1 to 3 show effects on the performance required for V-belts, requirements for miniaturization of a belt continuously variable transmission and improvement of durability of a power-transmission belt are becoming increasingly stringent, and further improvement is required. In particular, when a radius of winding around a pulley becomes smaller, heat generated when the belt is bent and stretched increases, and thus there is a problem that thermal degradation of a rubber is accelerated, cracking of the rubber and peeling of the cord are likely to occur, and durability of the belt is likely to be reduced.

Therefore, an object of the present invention is to provide a V-belt for power-transmission capable of reducing heat generation even when used in a small belt continuously variable transmission, and reducing the occurrence of peeling of a cord and cracking of a compression rubber layer, and to provide a belt power-transmission system including the V-belt for power-transmission.

### SOLUTION TO PROBLEM

As a result of intensive research to achieve the above object, the present inventors have discovered that a cord of a V-belt for power-transmission includes a Lang-twisted cord obtained by combining a plurality of primary twisted yarns including an aramid fiber and subjecting the combined primary twisted yarns to secondary twist, and a total fineness of the cord is adjusted to 1000 dtex to 3500 dtex, so that heat generation can be reduced even when used in a small belt continuously variable transmission, and the occurrence of peeling of the cord and cracking of the compression rubber layer can also be reduced, thereby completing the present invention.

That is, the present invention includes the following aspects.

Aspect [1]: a V-belt for power-transmission including a cord, in which the cord includes a Lang-twisted cord obtained by combining a plurality of primary twisted yarns including an aramid fiber and subjecting the combined primary twisted yarns to secondary twist, and the cord has a total fineness of 1000 dtex to 3500 dtex.

Aspect [2]: the V-belt for power-transmission according to the aspect [1], in which the cord has a tensile strength per cord of 500 N to 1000 N.

Aspect [3]: the V-belt for power-transmission according to the aspect [1] or [2], in which in the cord, the primary twisted yarns have a twist factor of 0.5 to 3, and the Lang-twisted cord has a twist factor of 0.5 to 5.

Aspect [4]: the V-belt for power-transmission according to any one of the aspects [1] to [3], in which a pitch of the cord is 0.05 mm to 0.25 mm larger than an average diameter of the cord.

Aspect [5]: the V-belt for power-transmission according to any one of the aspects [1] to [4], in which the cord has an average diameter of 0.4 mm to 1 mm.

Aspect [6]: the V-belt for power-transmission according to any one of the aspects [1] to [5], in which an elongation rigidity per 1 mm of a pitch width of the V-belt for power-transmission is 6500 N to 20000 N.

Aspect [7]: the V-belt for power-transmission according to any one of the aspects [1] to [6], in which a bending rigidity per 1 mm of a pitch width of the V-belt for power-transmission is 40 N(mm)² to 260 N(mm)².

Aspect [8]: the V-belt for power-transmission according to any one of the aspects [1] to [7], in which the V-belt for power-transmission has a thickness of 5 mm to 12 mm, and a pitch width of 10 mm to 25 mm.

Aspect [9]: the V-belt for power-transmission according to any one of the aspects [1] to [8], being a raw edge V-belt including a cog on at least an inner circumferential surface side.

Aspect [10]: the V-belt for power-transmission according to any one of the aspects [1] to [9], being a variable speed belt for a small belt continuously variable transmission.

Aspect [11]: a belt power-transmission system including: the V-belt for power-transmission according to any one of the aspects [1] to [10]; and a pulley.

Aspect [12]: the belt power-transmission system according to the aspect [11], in which the V-belt for power-transmission is a raw edge V-belt including a cog on at least an inner circumferential surface side, and is a variable speed belt for a small belt continuously variable transmission.

### ADVANTAGEOUS EFFECTS OF INVENTION

In the present invention, the cord of the V-belt for power-transmission includes the Lang-twisted cord obtained by combining a plurality of primary twisted yarns including an aramid fiber and subjecting the combined primary twisted yarns to secondary twist, and the total fineness of the cord is adjusted to 1000 dtex to 3500 dtex, and thus heat generation can be reduced even when used in a small belt continuously variable transmission, and the occurrence of peeling of the cord and cracking of a compression rubber layer can also be reduced.

### BRIEF DESCRIPTION OF DRAWINGS

[FIG. 1] FIG. 1 is a schematic cross-sectional view for illustrating a transmission mechanism of a belt continuously variable transmission.
[FIG. 2] FIG. 2 is a schematic partial cross-sectional perspective view illustrating an example of a raw edge cogged V-belt of the present invention.
[FIG. 3] FIG. 3 is a schematic cross-sectional view in which the raw edge cogged V-belt in FIG. 2 is cut in a belt longitudinal direction.
[FIG. 4] FIG. 4 is a schematic partial cross-sectional perspective view illustrating an example of the raw edge double cogged V-belt of the present invention.
[FIG. 5] FIG. 5 is a schematic cross-sectional view in which the raw edge double cogged V-belt in FIG. 4 is cut in the belt longitudinal direction.
[FIG. 6] FIG. 6 is a schematic cross-sectional view illustrating a definition of an entire thickness of the raw edge double cogged V-belt in the present invention.
[FIG. 7] FIG. 7 is a schematic cross-sectional view illustrating a definition of a belt pitch width of the raw edge cogged V-belt in the present invention.
[FIG. 8] FIG. 8 is a schematic view illustrating a method for measuring a bending rigidity EI of a raw edge V-belt obtained in Examples.
[FIG. 9] FIG. 9 illustrates a layout of a peeling resistance test of the raw edge V-belt obtained in Examples.
[FIG. 10] FIG. 10 illustrates a layout of a crack resistance test of the raw edge V-belt obtained in Examples.

### DESCRIPTION OF EMBODIMENTS

### [V-belt for Power-transmission]

A V-belt for power-transmission of the present invention is not particularly limited, as long as this V-belt for power-transmission includes a cord, in which the cord includes a Lang-twisted cord obtained by combining a plurality of primary twisted yarns including an aramid fiber and subjecting the combined primary twisted yarns to secondary twist, and the cord has a total fineness of 1000 dtex to 3500 dtex. The V-belt for power-transmission is a frictional power-transmission belt having a V-shaped frictional power-transmission surface, and the V-belt having such a shape may be a raw edge type belt (raw edge V-belt) having a rubber layer in which a frictional power-transmission surface (V-shaped side surface) is exposed, or may be a wrapped type belt (wrapped V-belt) in which a frictional power-transmission surface is covered with a cover fabric. Among those, the raw edge V-belt is preferred from a viewpoint of excellent power-transmission capabilities.

The raw edge V-belt includes a raw edge V-belt without a cog and a raw edge cogged V-belt with a cog. Further, the raw edge cogged V-belt includes a raw edge cogged V-belt in which a cog is formed only on an inner circumferential side of the raw edge V-belt, and a raw edge double cogged V-belt in which cogs are formed on both an inner circumferential side and an outer circumferential side of the raw edge V-belt. In the present application, the raw edge V-belt without a cog, the raw edge cogged V-belt, and the raw edge double cogged V-belt are collectively referred to as the "raw edge V-belt". Among those, the raw edge cogged V-belt and the raw edge double cogged V-belt for a variable speed belt (CVT belt) are preferred from a viewpoint of large effects of the present invention.

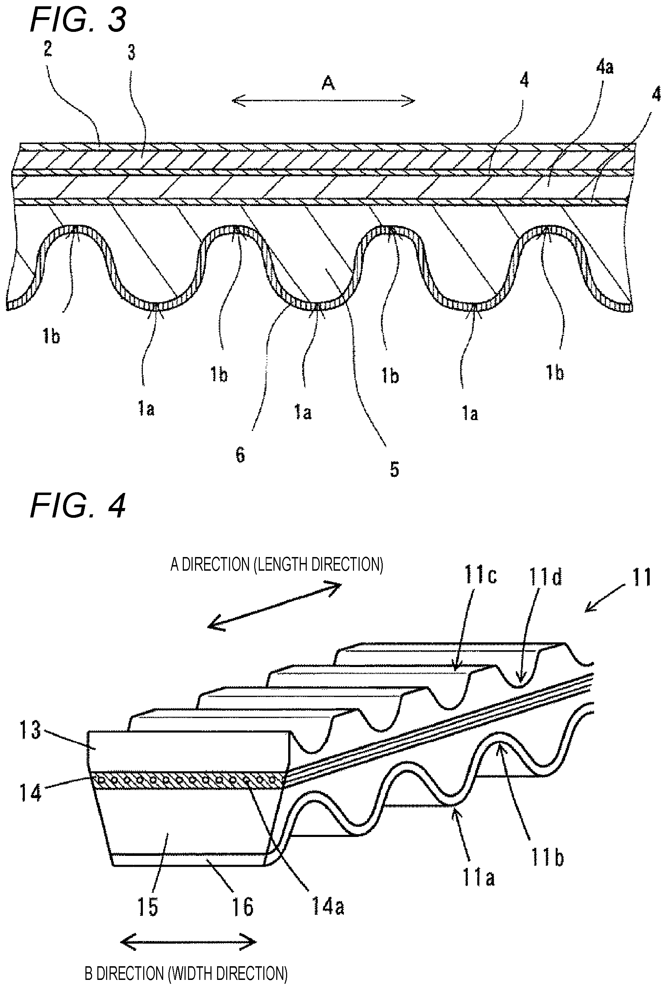

FIG. 2 is a schematic partial cross-sectional perspective view illustrating an example of a raw edge cogged V-belt of the present invention, and FIG. 3 is a schematic cross-sectional view in which the raw edge cogged V-belt in FIG. 2 is cut in a belt longitudinal direction.

In the example, a raw edge cogged V-belt 1 has a cog portion formed by alternately arranging a cog ridge 1a and a cog valley 1b along the belt longitudinal direction (A direction in the figure) on an inner circumferential surface of a belt main body, a cross-sectional shape in a longitudinal direction of the cog ridge 1a is a substantially semicircular shape (curved shape or wave shape), and a cross-sectional shape in a direction (width direction or B direction in the figure) orthogonal to the longitudinal direction is a trapezoidal shape. That is, each cog ridge 1a protrudes in a substantially semicircular shape in a cross section in the A direction from the cog valley 1b in a belt thickness direction. The raw edge cogged V-belt 1 has a laminated structure, and a reinforcing fabric 2, a tension rubber layer 3, a tension member layer (adhesion rubber layer) 4, a compression rubber layer 5, and a reinforcing fabric 6 are laminated in sequence from an outer circumferential side toward an inner circumferential side (side on which the cog portion is formed) of the belt. A cross-sectional shape in a belt width direction is a trapezoidal shape in which a belt width decreases from the outer circumferential side toward the inner circumferential side of the belt. Further, cords 4a are embedded in the adhesion rubber layer 4, and the cog portion is formed at the compression rubber layer 5 by a molding die with a cog.

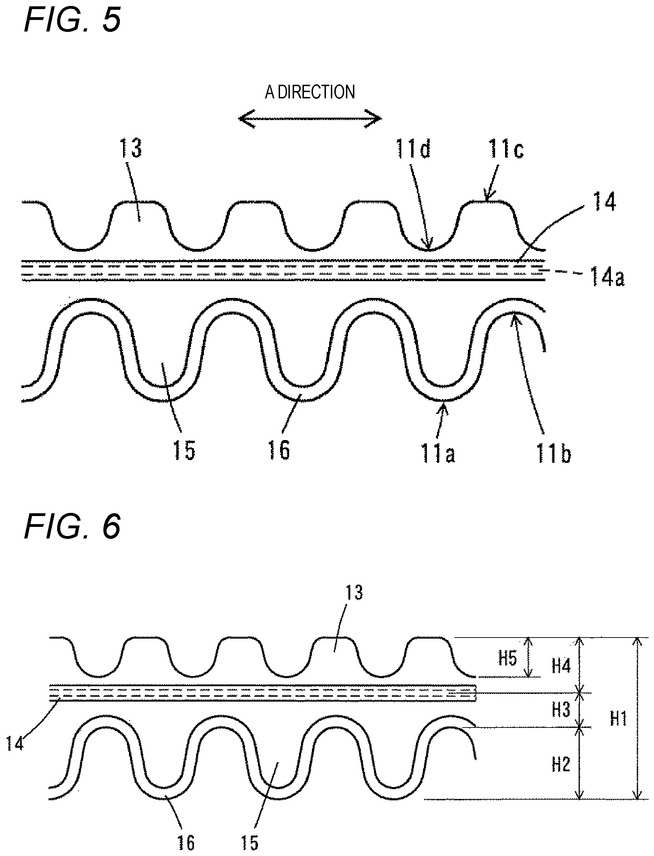

FIG. 4 is a schematic partial cross-sectional perspective view illustrating an example of a raw edge double cogged V-belt of the present invention, and FIG. 5 is a schematic cross-sectional view in which the raw edge double cogged V-belt of FIG. 4 is cut in the belt longitudinal direction.

In the example, a raw edge double cogged V-belt 11 has an inner circumferential cog portion formed by alternately arranging an inner circumferential cog ridge 11a and an inner circumferential cog valley 11b along a belt longitudinal direction (A direction in the figure) on an inner circumferential surface of a compression rubber layer 15, a cross-sectional shape in a longitudinal direction of the inner circumferential cog ridge 11a is a substantially semicircular shape (curved shape or wave shape), and a cross-sectional shape in a direction (width direction or B direction in the figure) orthogonal to the longitudinal direction is a trapezoidal shape. That is, each inner circumferential cog ridge 11a protrudes in a substantially semicircular shape in a cross section in the A direction from the inner circumferential cog valley 11b in a belt thickness direction.

Furthermore, an outer circumferential surface also has an outer circumferential cog portion formed by alternately arranging an outer circumferential cog ridge 11c and an outer circumferential cog valley 11d along the belt longitudinal direction, and a cross-sectional shape in the longitudinal direction of the outer circumferential cog ridge 11c is a substantially trapezoidal shape, and a cross-sectional shape in a direction (width direction or B direction in the figure) orthogonal to the longitudinal direction is a substantially rectangular shape. That is, each outer circumferential cog ridge 11c protrudes in a substantially trapezoidal shape in the cross section in the A direction from the outer circumferential cog valley 11d in the belt thickness direction.

The raw edge double cogged V-belt has a laminated structure, and a tension rubber layer 13, a tension member layer (adhesion rubber layer) 14, a compression rubber layer 15, and a reinforcing fabric 16 are laminated in sequence from an outer circumferential side to an inner circumferential side of the belt. The cross-sectional shape in a belt width direction is a substantially trapezoidal shape in which a belt width decreases from the outer circumferential side toward the inner circumferential side of the belt. Further, cords 14a are embedded in the tension member layer 14, and the inner circumferential cog portion and the outer circumferential cog portion are formed at the compression rubber layer 15 and the tension rubber layer 13 by a molding die with a cog, respectively.

### [Entire Thickness of V-belt for Power-transmission]

In the V-belt for power-transmission (in particular, raw edge V-belt) of the present invention, a thickness (average thickness) of the entire belt is, for example, 5 mm to 12 mm, preferably 7 mm to 11.5 mm, and more preferably 8 mm to 11 mm. In the present invention, when the thickness of the V-belt for power-transmission is within this range, a belt bending rigidity can be reduced, and even when used in a small belt continuously variable transmission, heat generation, peeling of a cord, and the occurrence of cracking of rubber can be reduced.

FIG. 6 illustrates a definition of the entire thickness of the raw edge double cogged V-belt in the present invention based on FIG. 5. Specifically, in FIG. 6, in the raw edge double cogged V-belt 11, an outer circumferential cog height H5 indicates a height of the outer circumferential cog portion formed on the outer circumferential surface, and an outer circumferential pitch height H4 indicates a distance from a center portion of the cord to the outer circumferential surface (top portion of cog portion). An inner circumferential cog height H2 indicates a height of the inner circumferential cog portion formed on the inner circumferential surface, and a cord-to-valley thickness H3 indicates a distance from the center portion of the cord to a deepest part of the inner circumferential cog valley. In contrast, an entire thickness H1 refers to a total thickness obtained by summing the inner circumferential cog height H2, the cord-to-valley thickness H3, and the outer circumferential pitch height H4, and refers to a thickness at the top portion of the cog portion (maximum thickness of belt).

In the present application, the entire thickness of the V-belt for power-transmission (in particular, raw edge V-belt) refers to a thickness from the outer circumferential surface to the inner circumferential surface (thickness at thickest point of belt), and if cogs are present, as illustrated in FIG. 6, the tops of the cogs form the inner circumferential surface or the outer circumferential surface. Therefore, in a raw edge cogged V-belt with a cog only on the inner circumferential surface, a distance from the outer circumferential surface to the top portion of the cog portion on the inner circumferential surface is the entire thickness. That is, in the case of the raw edge cogged V-belt, the entire thickness refers to the distance from the top portion of the cog of the compression rubber layer (convex top portion on inner circumferential side) to a belt back surface, and in the case of the raw edge double cogged V-belt, the entire thickness refers to the distance from the top portion of the cog of the compression rubber layer (convex top portion on inner circumferential side) to the top portion of the cog of the tension rubber layer (convex top portion on outer circumferential side).

### (Belt Pitch Width of V-belt for Power-transmission)

In the V-belt for power-transmission (in particular, raw edge V-belt) of the present invention, a belt pitch width is, for example, 10 mm to 25 mm, preferably 12 mm to 24.5 mm, and more preferably 15 mm to 24 mm. In the present invention, when the belt pitch width of the V-belt for power-transmission is within this range, the belt bending rigidity can be reduced, and even when used in a small belt continuously variable transmission, heat generation, peeling of a cord, and the occurrence of cracking of a rubber can be reduced. In particular, when the thickness of the entire belt is within the above range and the belt pitch width is within such a range, the thickness is small and the pitch width is narrow, and thus, effects of the present invention are particularly large, which is preferred.

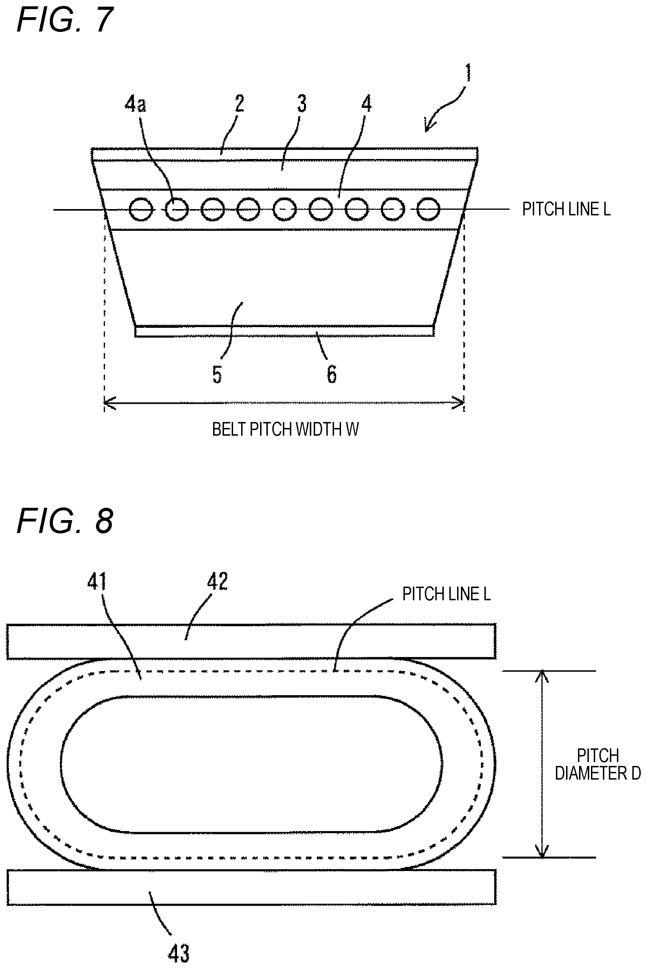

FIG. 7 illustrates a definition of the belt pitch width of the raw edge cogged V-belt in the present invention. That is, FIG. 7 is a schematic cross-sectional view of the raw edge cogged V-belt 1 in which the reinforcing fabric 2, the tension rubber layer 3, the tension member layer 4, the compression rubber layer 5, and the reinforcing fabric 6 are laminated in sequence, and a belt pitch width W refers to a belt width of a belt pitch line L (position on line connecting centers of cords 4a embedded at equal intervals in tension member layer 4).

### (Elongation Rigidity of V-belt for Power-transmission)

In the V-belt for power-transmission (in particular, raw edge V-belt) of the present invention, an elongation rigidity per 1 mm of the belt pitch width (belt elongation rigidity EA) is, for example, 6200 N to 25000 N, preferably 6500 N to 20000 N, more preferably 7000 N to 18000 N, even more preferably 7500 N to 15000 N, and most preferably 8000 N to 12000 N. In the present invention, the belt elongation rigidity EA is within such a range, and thus, the heat generation due to a slip can be reduced. If the belt elongation rigidity EA is too small, belt elongation may become large under a heavy load, and the slip may be likely to occur. On the other hand, if the belt elongation rigidity EA is too large, it becomes difficult for the belt elongation to absorb load fluctuations, and the slip may be likely to occur.

In the present application, the belt elongation rigidity EA represents a relationship between a tensile force and a strain (tension rate) when the belt is tensioned in a length direction, and if the belt elongation rigidity is high, the belt is difficult to elongate, and if the belt elongation rigidity is low, the belt is more likely to elongate.

In the present application, the belt elongation rigidity EA is defined as a proportionality constant of a belt tension with respect to a belt length change rate in a range of the belt tension from 200 N to 600 N. That is, in the present application, the belt elongation rigidity EA can be obtained as a slope of an approximate straight line of measured values at 100 N intervals between 200 N and 600 N of the belt tension in a graph where a horizontal axis represents the belt length change rate (%) and a vertical axis represents the belt tension (N), and specifically, the belt elongation rigidity EA can be measured by a method described in EXAMPLES below.

### (Bending Rigidity of V-belt for Power-transmission)

In the V-belt for power-transmission (in particular, raw edge V-belt) of the present invention, a bending rigidity (belt bending rigidity EI) per 1 mm of the belt pitch width is, for example, 40 N(mm)² to 260 N(mm)², preferably 60 N(mm)² to 250 N(mm)², more preferably 80 N(mm)² to 240 N(mm)², even more preferably 100 N(mm)² to 235 N(mm)², and most preferably 120 N(mm)² to 230 N(mm)². In the present invention, the belt bending rigidity EI is within such a range, and thus, the heat generation due to bending can be reduced. If the belt bending rigidity EI is too small, belt vibration and noise may increase, and conversely, if the belt bending rigidity EI is too large, internal heat generation due to bending and elongating of the belt may increase.

In the present application, the belt bending rigidity EI represents a relationship between a compressive force required to compress an annular belt from the outer circumferential side to deform the belt into a barrel shape, and a pitch diameter (diameter of arc drawn by pitch line connecting center lines of cords) when a bending portion of the belt is considered as a circular arc, and if the belt bending rigidity is high, the belt is difficult to bend, and if the belt bending rigidity is low, the belt is more likely to bend.

In the present application, the belt bending rigidity EI can be measured using an autograph, and specifically, the belt bending rigidity EI can be measured by a method described in EXAMPLES below.

### [Cord]

In the V-belt for power-transmission of the present invention, the cord includes a Lang-twisted cord obtained by combining a plurality of primary twisted yarns including an aramid fiber and subjecting the combined primary twisted yarns to secondary twist, and the cord has a total fineness of 1000 dtex to 3500 dtex. In the present invention, the cord having such characteristics can reduce the heat generation during use of the V-belt for power-transmission, and can reduce the peeling of the cord and the occurrence of the cracking of the compression rubber layer, and is particularly effective when used in a small belt continuously variable transmission with a relatively low load as a variable speed belt. A reason why it is particularly effective when used as a variable speed belt can be estimated as follows.

Examples of a failure mode of the variable speed belt include cracking of a cog valley and peeling of a cord, and both types of failures are more likely to occur when a belt temperature is high. Therefore, reducing heat generation in the belt is key to improving the durability of the variable speed belt. Examples of a cause of the heat generation of the belt include the slip (frictional heat due to friction between belt and pulley) and bending (internal heat generation due to bending and elongating of belt).

The general understanding is that it is desirable for a power-transmission belt to have high elongation rigidity, and thus, there is a tendency to use materials having a high tensile elastic modulus, such as aramid fibers and carbon fibers, for the cord, and to make a cord diameter larger. In contrast, the V-belt for power-transmission of the present invention includes a cord having a small diameter, and by using an aramid fiber having a high tensile elastic modulus as the cord, it can be estimated that the belt elongation rigidity can be ensured even the diameter is small. The belt elongation rigidity can be maintained at a high level, and thus, it can be estimated that the belt elongation can be reduced to reduce the slip, and the heat generation can be reduced. Further, the diameter is small, so that the belt bending rigidity can be reduced, and it can be estimated that the heat generation due to bending can also be reduced.

That is, in the present invention, the cord includes an aramid fiber and has a small diameter, and thus, a high elastic modulus of aramid increases the belt elongation rigidity, the heat generation due to slip can be reduced, and the small diameter reduces the belt bending rigidity, and the heat generation due to bending can be reduced.

In the Lang-twisted cord constituting such a cord, the primary twisted yarn may be an aramid multifilament yarn containing a plurality of aramid fibers. The aramid multifilament yarn may also contain other fibers (such as polyester fibers) if necessary. A proportion of the aramid fiber may be 50 mass% or more (in particular, 80 mass% to 100 mass%) with respect to the entire multifilament yarns, and preferably, all filaments are aramid fibers. In the present invention, the cord includes the aramid fiber, so that the belt elongation rigidity can be improved, and the heat generation due to the slip can be reduced. Therefore, if the proportion of the aramid fibers is too small, the heat generation may be likely to occur.

The aramid multifilament yarn only needs to include a plurality of aramid filaments, and for example, 100 filaments to 5000 filaments, preferably 300 filaments to 2000 filaments, more preferably 600 filaments to 1500 filaments, and even more preferably 800 filaments to 1200 filaments. An average fineness of the aramid filaments is, for example, 0.8 dtex to 10 dtex, preferably 1 dtex to 5 dtex, more preferably 1.1 dtex to 2 dtex, and more preferably 1.5 dtex to 1.7 dtex.

The aramid fiber is preferably a para-aramid fiber from a viewpoint of excellent mechanical strength. Specifically, the para-aramid fiber may be a para-aramid fiber including repeating units of a single kind (for example, "Twaron (registered trademark)" manufactured by Teijin Ltd., or "Kevlar (registered trademark)" manufactured by DU PONT-TORAY Co., Ltd., which is poly(para-phenylene terephthalamide) fiber) or may be a co-para-aramid fiber including repeating units of a plurality of kinds (for example, "Technora" manufactured by Teijin Ltd., which is an aramid fiber of a copolymer of poly(para-phenylene terephthalamide) and 3,4'-oxydiphenylene terephthalamide). Among those, the co-para-aramid fiber is particularly preferred.

A tensile elastic modulus of the aramid fiber can be selected from a range of approximately 50 GPa to 100 GPa, and for example, is 50 GPa to 90 GPa, preferably 60 GPa to 90 GPa, more preferably 65 GPa to 85 GPa, and even more preferably 70 GPa to 80 GPa. In applications requiring high bending fatigue resistance, the aramid fiber may be a highelongation aramid fiber having a tensile elastic modulus of approximately 50 GPa to 70 GPa. If the tensile elastic modulus is too low, the belt elongation rigidity may decrease, and the heat generation due to the slip may occur, and conversely, if the tensile elastic modulus is too high, the bending fatigue resistance may decrease.

In the present application, the tensile elastic modulus refers to a value of an apparent Young's modulus measured in accordance with a method for measuring an initial tensile resistance described in Section 8.10 of JIS L 1013 (2021).

A fineness of each of the primary twisted yarns is 2000 dtex or less, preferably 500 dtex to 2000 dtex, more preferably 1000 dtex to 1900 dtex, even more preferably 1300 dtex to 1800 dtex, and most preferably 1500 dtex to 1700 dtex. If the fineness is too small, the elongation may increase, the tensile strength and the tensile elastic modulus may decrease, and the economic efficiency may also decrease, and conversely, if the fineness is too large, the bending fatigue resistance may decrease.

It is sufficient that the number of primary twisted yarns is two or more, and is preferably 2 to 6, more preferably 2 to 4, even more preferably 2 to 3, and most preferably 2. If the number is too large, the bending fatigue resistance may decrease.

A twist factor of each of the primary twisted yarns (primary twist factor) can be selected from a range of approximately 0.3 to 5, and is, for example, 0.5 to 3, preferably 0.6 to 2.5, more preferably 0.7 to 2, even more preferably 0.8 to 1.5, and most preferably 0.9 to 1.2. If the primary twist factor is too small, the belt bending rigidity may increase, and the bending fatigue resistance may decrease, and conversely, if the primary twist factor is too large, the belt elongation rigidity may decrease.

In the present invention, the primary twisted yarns are produced by twisting multifilament yarns in one direction, and a plurality of obtained primary twisted yarns are then aligned and subjected to secondary twist to form a twisted cord, and the twisted cord is a Lang-twisted cord in which the secondary twist is applied in a direction same as a primary twist direction. The Lang-twisted cord has excellent bendability due to a large inclination angle of the filaments with respect to a longitudinal direction of the twisted cord, and can reduce the belt bending rigidity.

A twist factor of the Lang-twisted cord (secondary twist factor of secondary twisted yarn) can be selected from a range of approximately 0.5 to 5, and for example, 1 to 4.5, preferably 1.5 to 4, more preferably 2 to 3.8, even more preferably 2.5 to 3.5, and most preferably 2.8 to 3.2. If the secondary twist factor is too small, the belt bending rigidity may increase, and the bending fatigue resistance may decrease, and conversely, if the secondary twist factor is too large, the belt elongation rigidity may decrease.

A ratio (secondary twist factor/primary twist factor) of the secondary twist factor to primary twist factor is, for example, 0.5 to 10, preferably 1 to 8, more preferably 1.5 to 5, even more preferably 2 to 4, and most preferably 2.5 to 3.5.

In the present application, the twist factors, that is, the primary twist factor and the secondary twist factor can be calculated based on the following formula.$TF = TN \times {D}^{0.5} / 960$ [In formula, TF: twist factor, TN: the number of twists per 1 m, and D: fineness (tex) of yarn]

The total fineness of the Lang-twisted cord is 1000 dtex to 3500 dtex. In the present invention, since the total fineness of the cord including the Lang-twisted cord is small, the belt bending rigidity is low, and the heat generation due to bending can be reduced. If the total fineness is less than 1000 dtex, the belt elongation rigidity may decrease, and if the total fineness exceeds 3500 dtex, the belt bending rigidity may increase. The total fineness of the Lang-twisted cord is preferably 2000 dtex to 3450 dtex, and more preferably 3000 dtex to 3400 dtex.

The Lang-twisted cord subjected to the secondary twist may be subjected to an adhesion treatment (or surface treatment) to improve adhesion to a rubber component. A method in the related art can be used as an adhesion treatment method, and examples thereof include a method described in JP6349369B that includes a step of performing a treatment with a first treatment agent containing a rubber composition (a) containing a condensate (a1) of a resorcin and formaldehyde, a rubber component (a2) containing a carboxy-modified latex, and a curing agent (a3) containing a polycarbodiimide resin having a plurality of carbodiimide groups, and a hydrophilic solvent (b), and among these, a method including a first treatment step of performing the treatment with the first treatment agent containing the rubber composition (a) containing the curing agent (a3) containing a polycarbodiimide resin having a plurality of carbodiimide groups and the hydrophilic solvent (b), a second treatment step of treating a firsttreated yarn treated in the first treatment step with a second treatment agent containing a resorcin, formaldehyde, and a latex, and a third treatment step of treating a second-treated yarn treated in the second treatment step with a third treatment agent containing a rubber is preferred. By allowing an adhesive component to immerse between the primary twisted yarns and between single fibers constituting the primary twisted yarns, and adhering the adhesive component to surfaces of the fibers, a bundling property of the fibers can be improved.

An adhesion rate of the adhesive component (adhesion rate of solid content) is, for example, 1 mass% to 50 mass%, preferably 3 mass% to 30 mass%, more preferably 5 mass% to 25 mass%, and even more preferably 10 mass% to 20 mass% with respect to the Lang-twisted cord before the adhesion treatment. If a proportion of the adhesive component is too small, the adhesion between the fibers may be insufficient, and friction between the fibers may occur during the bending, the bending fatigue resistance may decrease, and if the proportion of the adhesive component is too large, the cord diameter may become too large.

An average diameter of the cord (Lang-twisted cord after adhesion treatment) is, for example, 0.1 mm to 1.2 mm, preferably 0.3 mm to 1.1 mm, more preferably 0.4 mm to 1 mm, even more preferably 0.5 mm to 0.9 mm, and most preferably 0.6 mm to 0.8 mm.

In the present application, the average diameter of the cord refers to an average value of the diameters of the cords in the belt. The average diameter of the cord is obtained by photographing a cross-section in the belt width direction with a scanning electron microscope (SEM), measuring a length in the belt width direction of all the cords included in the belt in the photographed image, and calculating an arithmetic mean. However, if a part of the cords is missing on a side surface of the belt, this part is excluded from the measurement.

In the present invention, compared to, for example, a tensile strength of the cord in Example of Patent Literature 2 (tensile strength of aramid cord with total fineness of 9900 dtex is 1300 N), the total fineness of the cord is smaller, and the tensile strength per cord is low, and thus, by reducing a cord pitch and arranging the cords densely, the belt elongation rigidity can be improved. From a viewpoint of increasing the belt elongation rigidity, it is considered preferable that the tensile strength per cord be higher. However, if the thickness of the cord is increased to improve the tensile strength per cord, the bendability may be reduced, and it is necessary to increase the cord pitch. Therefore, the belt elongation rigidity is not significantly improved. In the present invention, the cord diameter is reduced to arrange the cords densely while ensuring that the tensile strength per cord does not become excessively low, and the bending rigidity can be reduced while maintaining the belt elongation rigidity.

The tensile strength per cord is, for example, 300 N to 1200 N, preferably 500 N to 1000 N, more preferably 550 N to 800 N, even more preferably 580 N to 700 N, and most preferably 600 N to 650 N. If the tensile strength per cord is too low, the belt elongation rigidity may decrease, and if the tensile strength per cord is too high, the belt bending rigidity may increase.

In the present application, the tensile strength per cord can be measured in accordance with JIS L 1017 (2002).

The cords are arranged at predetermined intervals in the belt width direction, extend along the belt length direction (circumferential direction), and are embedded in the tension member layer. The cords may act as tensile members and be arranged to extend in parallel at a predetermined pitch in parallel with the belt length direction, and from a viewpoint of productivity, the cords are generally arranged in a spiral shape to extend in parallel at a predetermined pitch in substantially parallel with the belt length direction. In the case of the spiral arrangement, an angle of the cord with respect to the belt length direction may be, for example, 5° or less, and it is preferable that the angle be closer to 0° from a viewpoint of belt running performance.

The cord pitch (average value of distance between centers of adjacent cords in cross-section in belt width direction) is preferably larger than an average diameter of the cords within a predetermined range. Specifically, a value obtained by subtracting the cord diameter from the cord pitch (value of "cord pitch - average cord diameter", and referring to width of portion where no cords exist in cross section in belt width direction) can be selected from a range of approximately 0.03 mm to 0.3 mm, and is, for example, 0.05 mm to 0.25 mm, preferably 0.08 mm to 0.23 mm, more preferably 0.1 mm to 0.22 mm, and even more preferably 0.15 mm to 0.21 mm. If this value is too small, the cords may overlap or rub against each other, a belt tensile strength may be reduced, and conversely, if this value is too large, the belt elongation rigidity may decrease. That is, from a viewpoint of increasing the belt elongation rigidity, a smaller value is preferable, but if the above value is too small, the cords may overlap or rub against each other, and the strength may decrease.

In the present application, the number of cords, as illustrated in FIG. 2, refers to the apparent number of cords, which are arranged at a predetermined cord pitch in the belt width direction, in a cross-sectional view. That is, the number of the cords refers to the number of spirals when one cord is embedded in a spiral shape. However, in reality, since the cord is embedded in a spiral shape, the arrangement aspect of the cords differs depending on a location where the cross section is taken within a single endless V-belt for power-transmission. Therefore, for practical purposes, when each cord pitch is a constant value, the value obtained by truncating a value after a decimal point from a calculated value obtained by dividing the belt width by the cord pitch is regarded as an approximate "number of cords" (effective number).

### [Compression Rubber Layer]

In the V-belt for power-transmission of the present invention, the compression rubber layer is formed of a rubber composition (crosslinked rubber composition) containing a first rubber component.

### (A1) First Rubber Component

A vulcanizable or crosslinkable rubber may be used as the first rubber component, and examples thereof include a diene rubber [such as a natural rubber (NR), an isoprene rubber (IR), a butadiene rubber (BR), a chloroprene rubber (CR), a styrene butadiene rubber (SBR), an acrylonitrile butadiene rubber (NBR), and a hydrogenated nitrile rubber (H-NBR)], an ethylene-α-olefin elastomer [such as an ethylene-propylene copolymer (EPM) and an ethylene-propylene-diene terpolymer (EPDM)], a chlorosulfonated polyethylene rubber, an alkylated chlorosulfonated polyethylene rubber, an epichlorohydrin rubber, an acrylic rubber, a silicone rubber, an urethane rubber, and a fluorine rubber. Those rubber components may be used alone or in combination of two or more kinds thereof.

Among those, the ethylene-α-olefin elastomer and the chloroprene rubber are preferred, and the chloroprene rubber is particularly preferred from a viewpoint of excellent balance of heat resistance, abrasion resistance, oil resistance, and the like, and high productivity.

When the first rubber component includes the chloroprene rubber, from a viewpoint of being capable of improving the properties and productivity, a proportion of the chloroprene rubber in the first rubber component may be 50 mass% or more, preferably 80 mass% or more, more preferably 90 mass% or more (in particular, 90 mass% to 100 mass%), and most preferably 100 mass% (chloroprene rubber only). When the first rubber component includes the ethylene-α-olefin elastomer, a proportion of the ethylene-α-olefin elastomer in the first rubber component is the same as the proportion of the chloroprene rubber.

### (A2) First Short Fiber

The rubber composition forming the compression rubber layer may further include a first short fiber. Examples of the first short fiber include a synthetic short fiber such as a polyamide short fiber (such as an aliphatic polyamide short fiber such as a polyamide 6 short fiber, a polyamide 66 short fiber, and a polyamide 46 short fiber; and an aramid short fiber), a polyester short fiber [such as a polyalkylene arylate fiber such as a polyethylene terephthalate (PET) short fiber and a polyethylene naphthalate (PEN) short fiber; a liquid crystal polyester short fiber; and a polyarylate short fiber (such as an amorphous wholly aromatic polyester short fiber)], a vinylon short fiber, a polyvinyl alcohol short fiber, and a polyparaphenylene benzobisoxazole (PBO) short fiber; a natural short fiber such as cotton, hemp, and wool; and an inorganic short fiber such as a carbon short fiber. These short fibers may be used alone or in combination of two or more thereof. Among those, the polyamide short fiber such as the aramid short fiber and the aliphatic polyamide short fiber is preferred, and a combination of the aramid short fiber and the aliphatic polyamide short fiber is particularly preferred.

An average fiber diameter of the first short fiber is 2 µm or more, and is, for example, 2 µm to 100 µm, preferably 3 µm to 50 µm, more preferably 7 µm to 40 µm, and even more preferably 10 µm to 30 µm. An average fiber length of the first short fiber is, for example, 1 mm to 20 mm, preferably 1.3 mm to 15 mm, more preferably 1.5 mm to 10 mm, even more preferably 2 mm to 5 mm, and most preferably 2.5 mm to 4 mm.

The first short fiber may be embedded in the compression rubber layer in a state of being oriented substantially parallel to the belt width direction in order to reduce the compression deformation of the belt against the pressure from the pulley.

The first short fiber may be subjected to a commonly-used adhesion treatment to enhance an adhesive strength with the first rubber component. A commonly-used method can be used as the adhesion treatment method, and examples thereof include a method of performing a treatment with a treatment liquid containing an initial condensate (such as a prepolymer of a novolac or resol type phenol resin) of phenols and formalin; a treatment liquid containing a rubber component (or a latex); a treatment liquid containing the initial condensate and the rubber component (latex); a treatment liquid containing a reactive compound (adhesive compound) such as a silane coupling agent, an epoxy compound (such as an epoxy resin), an isocyanate compound, and a bismaleimide compound. These methods may be used alone or in combination of two or more thereof. In these methods, the method of performing the treatment with the treatment liquid containing the initial condensate and the rubber component (latex) is preferred, and the method of performing the treatment with at least a resorcin-formalin-latex (RFL) liquid is particularly preferred.

A proportion of the first short fiber is, for example, 5 parts by mass to 50 parts by mass, preferably 5 parts by mass to 40 parts by mass, more preferably 10 parts by mass to 35 parts by mass, and even more preferably 20 parts by mass to 30 parts by mass with respect to 100 parts by mass of the first rubber component.

### (A3) Another Component

The rubber composition forming the compression rubber layer may contain a commonly-used additive as another component (first another component), and examples of the additive include a crosslinking agent or a vulcanizing agent (such as a sulfur-based crosslinking agent and an organic peroxide), a co-crosslinking agent (such as bismaleimides), a crosslinking aid or a crosslinking accelerator (such as a thiuram accelerator), a crosslinking retardant, metal powder (such as zinc powder), a metal oxide (such as a zinc oxide, a magnesium oxide, a lead oxide, a calcium oxide, a barium oxide, an iron oxide, a copper oxide, a titanium oxide, and an aluminum oxide), a filler [such as a reinforcing agent (reinforcing filler) such as carbon black and silicon oxide (such as hydrated silica); and an extender (a non-reinforcing filler or an inert filler) such as clay, calcium carbonate, talc, and mica], a plasticizer (or a softener) [such as oils (such as paraffin oil and naphthenic oil), an aliphatic carboxylic acid plasticizer, an aromatic carboxylic acid ester plasticizer, an oxycarboxylic acid ester plasticizer, a phosphate ester plasticizer, an ether plasticizer, and an ether ester plasticizer], a processing agent or a processing aid (such as stearic acid, metal stearate, wax, paraffin, and fatty acid amide), an anti-aging agent (such as an antioxidant, a thermal anti-aging agent, an anti-flex cracking agent, and an antiozonant), an adhesiveness improver, a colorant, a tackifier, a coupling agent (such as a silane coupling agent), a stabilizer (such as an ultraviolet absorber and a thermostabilizer), a flame retardant, and an antistatic agent. Those additives may be used alone or in combination of two or more kinds thereof. The metal oxides may act as crosslinking agents.

A proportion of the crosslinking agent (first crosslinking agent) is, for example, 1 part by mass to 20 parts by mass, preferably 2 parts by mass to 15 parts by mass, more preferably 3 parts by mass to 12 parts by mass, and even more preferably 4 parts by mass to 10 parts by mass with respect to 100 parts by mass of the first rubber component.

A proportion of the filler (first filler) such as carbon black is, for example, 10 parts by mass to 200 parts by mass, preferably 20 parts by mass to 100 parts by mass, more preferably 30 parts by mass to 80 parts by mass, and even more preferably 40 parts by mass to 70 parts by mass with respect to 100 parts by mass of the first rubber component.

A proportion of the metal powder is, for example, 1 part by mass to 30 parts by mass, preferably 3 parts by mass to 20 parts by mass, and more preferably 5 parts by mass to 15 parts by mass with respect to 100 parts by mass of the first rubber component.

A total proportion of the another component (first another component) is, for example, 5 parts by mass to 300 parts by mass, preferably 10 parts by mass to 200 parts by mass, more preferably 30 parts by mass to 150 parts by mass, and even more preferably 50 parts by mass to 100 parts by mass with respect to 100 parts by mass of the first rubber component.

### [Tension Rubber Layer]

The V-belt for power-transmission of the present invention may further include a tension rubber layer formed of a rubber composition (crosslinked rubber composition) containing a second rubber component.

The second rubber component can be selected from the rubber components exemplified as the first rubber component, including preferred aspects. The second rubber component may be a rubber component different from the first rubber component, but is usually the same as the first rubber component.

The rubber composition may further contain a short fiber (second short fiber), and the second short fiber can be selected from the short fibers exemplified as the first short fiber, including preferred aspects. An average fiber diameter and an average fiber length of the second short fiber can also be selected from the ranges of the first short fiber, including preferred aspects. The second short fiber may be a short fiber different from the first short fiber, but is usually the same as the first short fiber.

The rubber composition may further contain another component (second another component), and the second another component can be selected from another component exemplified as the first another component, including preferred aspects. The second another component may be another component different from the first another component, but is usually the same as the first another component.

### [Tension Member Layer]

The tension member layer only needs to include the cord as a tension member, and may be a tension member layer formed only of the cord, but it is preferable that the tension member layer be a tension member layer (adhesion rubber layer) formed of a crosslinked rubber composition in which the cord is embedded from a viewpoint of reducing peeling between layers and improving the durability of the belt. The adhesion rubber layer is interposed between the tension rubber layer and a compression rubber layer main body to adhere the tension rubber layer and the compression rubber layer, and the cord is embedded in the adhesion rubber layer.

### (Adhesion Rubber Layer)

The V-belt for power-transmission of the present invention may further include the adhesion rubber layer formed of a cured product (crosslinked rubber composition) of a rubber composition containing a third rubber component.

The third rubber component can be selected from the rubber components exemplified as the first rubber component, including preferred aspects. The third rubber component may be a rubber component different from the first rubber component, but is usually the same as the first rubber component.

The rubber composition may further contain another component (third another component), and the third another component can be selected from another component exemplified as the first another component.

A proportion of the crosslinking agent (third crosslinking agent) is, for example, 1 part by mass to 20 parts by mass, preferably 2 parts by mass to 15 parts by mass, more preferably 3 parts by mass to 12 parts by mass, and even more preferably 4 parts by mass to 10 parts by mass with respect to 100 parts by mass of the third rubber component.

A proportion of the filler (third filler) such as carbon black or silica is, for example, 10 parts by mass to 200 parts by mass, preferably 20 parts by mass to 100 parts by mass, more preferably 30 parts by mass to 80 parts by mass, and even more preferably 40 parts by mass to 70 parts by mass with respect to 100 parts by mass of the third rubber component.

A proportion of the adhesiveness improver is, for example, 1 part by mass to 20 parts by mass, preferably 2 parts by mass to 15 parts by mass, and more preferably 3 parts by mass to 10 parts by mass with respect to 100 parts by mass of the third rubber component.

A total proportion of the third another component is, for example, 5 parts by mass to 300 parts by mass, preferably 10 parts by mass to 200 parts by mass, more preferably 30 parts by mass to 150 parts by mass, and even more preferably 50 parts by mass to 100 parts by mass with respect to 100 parts by mass of the third rubber component.

An average thickness of the adhesion rubber layer is, for example, 0.8 mm to 3 mm, preferably 1.2 mm to 2.8 mm, and even more preferably 1.5 mm to 2 mm.

### [Reinforcing Fabric]

The V-belt for power-transmission of the present invention may include a reinforcing fabric. Examples of a form of the reinforcing fabric include a form in which the reinforcing fabric is laminated on an inner circumferential surface of the compression rubber layer, a form in which the reinforcing fabric is laminated on an outer circumferential surface of the tension rubber layer, and a form in which the reinforcing fabric is embedded in the compression rubber layer main body and/or the tension rubber layer.

The reinforcing fabric can be formed by, for example, a fabric material (in particular, woven fabric) such as a woven fabric, a wide-angle canvas fabric, a knitted fabric, or a nonwoven fabric, and if necessary, the reinforcing fabric may be laminated on or embedded in the compression rubber layer and/or the tension rubber layer in the above forms after the adhesion treatment, for example, treatment with an RFL liquid (such as immersion treatment), friction treatment in which an adhesion rubber is rubbed into the fabric material, or lamination of the adhesion rubber and the fabric material.

### [Method for Producing V-belt for Power-transmission]

A method for producing the V-belt for power-transmission (in particular, raw edge V-belt) is not particularly limited, and for example, a method for producing a raw edge cogged V-belt of the present invention is also not particularly limited, and for a lamination step of layers (a method for producing a belt sleeve), a commonly-used method can be used depending on the type of belt. For example, a typical method for producing a raw edge cogged V-belt will be described below.

First, a laminated body including the reinforcing fabric (lower fabric) and a sheet for compression rubber layer main body (uncrosslinked rubber sheet) is disposed, with the reinforcing fabric disposed at a lower side, to be in contact with a flat cogged mold in which tooth portions and groove portions corresponding to the inner circumferential cog portions (cog ridge portions 1a and cog bottom portions 1b illustrated in FIG. 2) are alternately arranged, and is pressed at a temperature of 60°C to 100°C (in particular, 70°C to 80°C) to produce a cog pad having an inner circumferential cog portion molded (pad which is not completely crosslinked and is in a semi-crosslinked state). Then, both ends of the cog pad may be cut perpendicularly from an appropriate position (particularly, top portion of cog ridge portion) to obtain a required length.

Next, an outer circumference of a cylindrical mold is covered with an inner mother mold having alternately arranged tooth portions and groove portions corresponding to the cog portions, the cog pad is wound by engaging with the tooth portions and the groove portions of the inner mother mold to joint at the both ends (in particular, top portion of cog ridge portion), a first sheet for adhesion rubber layer (lower adhesion rubber: uncrosslinked rubber sheet) may be laminated on the outer circumference of the cog pad, and then the cord (twisted cord) for forming the tension member may be spun spirally, and a second sheet for adhesion rubber layer (upper adhesion rubber: uncrosslinked rubber sheet) and a sheet for tension rubber layer (uncrosslinked rubber sheet) may be wound on the outer circumference thereof in sequence to produce an uncrosslinked molded product. Furthermore, if necessary, the reinforcing fabric (upper fabric) may be laminated onto the tension rubber layer.

Thereafter, the uncrosslinked molded product is covered with a jacket and placed in a well-known crosslinking device (such as a vulcanization can), and crosslinking molding is conducted at a temperature of 120°C to 200°C (in particular, 150°C to 180°C) to produce a crosslinked belt sleeve. Then, a cutter or the like is used to cut the crosslinked belt sleeve into a V shape to obtain an endless raw edge cogged V-belt.

In a case of a raw edge double cogged V-belt, while the outer circumference of the uncrosslinked molded product is covered with an outer mother mold having alternately arranged tooth portions and groove portions corresponding to the outer circumferential cog portions, the outer circumference is covered with a jacket, and crosslinking is conducted to obtain a crosslinked belt sleeve with a cog portion formed on an outer circumferential surface, and the crosslinked belt sleeve is cut into a V shape to obtain the raw edge double cogged V-belt.

The adhesion rubber layer can be formed by a plurality of sheets for adhesion rubber layer, and the cord (twisted cord) that forms the tension member may be spun in association with the laminating order of the plurality of sheets for adhesion rubber layer depending on a position of embedding in the adhesion rubber layer.

### EXAMPLES

Hereinafter, the present invention will be described in more detail based on Examples, but the present invention is not limited to these Examples. Details of materials used in Examples and Comparative Examples, and evaluation methods for Examples and Comparative Examples are shown below.

### [Used Material]

### (Rubber Component)

Chloroprene rubber: "PM-40" manufactured by Denka Co., Ltd.
Carboxyl-modified NBR latex (COOH-modified NBR): "Nipol 1571CL" manufactured by Nippon Zeon Co., Ltd., 38 mass% of active component, high nitrile type

### (Curing Agent)

Polycarbodiimide dispersion liquid: "Carbodilite E-02" manufactured by Nisshinbo Chemical Inc., 40 mass% of active component, NCN equivalent of 445
Polymeric isocyanate (polymeric MDI): "Millionate (registered trademark) MR-200" manufactured by Tosoh Co., Ltd., NCO content: 30 mass%

### (Short Fiber)

The following short fibers were used. All short fibers were subjected to an adhesion treatment in which the short fibers were immersed in an RFL liquid [mixture of 2.6 parts by mass of resorcinol, 1.4 parts by mass of 37 mass% formalin, 17.2 parts by mass of vinylpyridine-styrene-butadiene copolymer latex (manufactured by Nippon Zeon Co., Ltd.), and 78.8 parts by mass of water], and dried. An adhesion rate of an adhesive component (solid content) was adjusted to 6 mass% with respect to the short fibers before treatment.
Para-aramid short fiber: "Twaron" manufactured by Teijin Ltd., fiber length: 3 mm
Nylon 66 short fiber: "Leona" manufactured by Asahi Kasei Corporation, fiber length: 3 mm

### (Filler)

Carbon black FEF: "SEAST SO" manufactured by Tokai Carbon Co., Ltd.
Silica: "Nipsil VN3" manufactured by Tosoh Silica Co., Ltd.

### (Additive)

Naphthenic oil: "Diana Process Oil NS-90S" manufactured by Idemitsu Kosan Co., Ltd.
Adhesiveness improver A (resorcinol formaldehyde co-condensate): "POWERPLAST PP-1860" manufactured by Singh Plasticisers & Resins
Adhesiveness improver B (hexamethoxymethyl melamine): "POWERPLAST PP-1890S" manufactured by Singh Plasticisers & Resins
Magnesium oxide: "Kyowa Mag 150" manufactured by Kyowa Chemical Industry Co., Ltd.
Crosslinking accelerator MBTS (dibenzothiazyl disulfide): "Nocceler DM" manufactured by Ouchi Shinko Chemical Industrial Co., Ltd.
Crosslinking accelerator TMTD (tetramethylthiuram disulfide): "Nocceler TT" manufactured by Ouchi Shinko Chemical Industrial Co., Ltd.
Anti-aging agent A (octyl diphenylamine): "Nonflex OD-3" manufactured by Seiko Chemical Co., Ltd.
Anti-aging agent B (4,4'-bis(α,α-dimethylbenzyl)diphenylamine): "Nonflex DCD" manufactured by Seiko Chemical Co., Ltd.
Anti-aging agent C (microcrystalline wax): "Suntight C" manufactured by Seiko Chemical Co., Ltd.
Zinc powder: "M-11" manufactured by Sakai Chemical Industry Co., Ltd.
Softening agent: "Adeka Cizer C-8" manufactured by ADEKA Corporation
Stearic acid: "Beads Stearic acid TSUBAKI" manufactured by NOF Corporation
Zinc oxide: "zinc oxide (JIS standard type II)" manufactured by Hakusui Tech Co., Ltd.
Co-crosslinking agent (N,N'-m-phenylene dimaleimide): "Vulnoc PM" manufactured by Ouchi Shinko Chemical Industrial Co., Ltd.

### (Cord)

The following cords were used. All cords were subjected to an adhesion treatment using the following treatment method. An adhesion rate (final adhesion rate after third treatment step) of the adhesive component (solid content) was adjusted to 15 mass% with respect to the cord before treatment (before first treatment step).

Aramid cord used in Examples 1 to 3: Lang-twisted cord with total fineness of 3340 dtex obtained by combining two primary twisted yarns obtained by subjecting an aramid fiber bundle with 1670 dtex ("Technora" manufactured by Teijin Ltd.) to primary twist with a twist factor of 1.0, and then subjecting the combined primary twisted yarns to secondary twist with a twist factor of 3.0 in a direction same as that of the primary twist (diameter of treated cord was approximately 0.70 mm, and tensile strength per cord was 620 N).

Polyester cord used in Comparative Examples 1 to 3: plied cord with total fineness of 6600 dtex obtained by combining three primary twisted yarns obtained by subjecting two PET fiber bundles with 1100 dtex ("Tetron" manufactured by TORAY Co., Ltd.,) to primary twist with a twist factor of 3.0, and then subjecting the combined primary twisted yarns to secondary twist with a twist factor of 3.0 in a direction opposite to that of the primary twist (diameter of treated cord was approximately 1.00 mm, and tensile strength per cord was 440 N).

Aramid cord used in Comparative Examples 4, 7, and 10: plied cord with total fineness of 3340 dtex obtained by combining two primary twisted yarns obtained by subjecting an aramid fiber bundle with 1670 dtex ("Technora" manufactured by Teijin Ltd.) to primary twist with a twist factor of 1.0, and then subjecting the combined primary twisted yarns to secondary twist with a twist factor of 3.0 in a direction opposite to that of the primary twist (diameter of treated cord was approximately 0.71 mm, and tensile strength per cord was 620 N).

Aramid cord used in Comparative Examples 5, 8, and 11: Lang-twisted cord with total fineness of 6600 dtex obtained by combining three primary twisted yarns obtained by subjecting two aramid fiber bundles with 1100 dtex ("Technora" manufactured by Teijin Ltd.) to primary twist with a twist factor of 1.0, and then subjecting the combined primary twisted yarns to secondary twist with a twist factor of 3.0 in a direction same as that of the primary twist (diameter of treated cord was approximately 0.94 mm, and tensile strength per cord was 1300 N).

Aramid cord used in Comparative Examples 6, 9, and 12: plied cord with total fineness of 6600 dtex obtained by combining three primary twisted yarns obtained by subjecting two aramid fiber bundles with 1100 dtex ("Technora" manufactured by Teijin Ltd.) to primary twist with a twist factor of 1.0, and then subjecting the combined primary twisted yarns to secondary twist with a twist factor of 3.0 in a direction opposite to that of the primary twist (diameter of treated cord was approximately 0.95 mm, and tensile strength per cord was 1300 N).

Table 1 summarizes details of the cords used in Examples 1 to 3 and Comparative Examples 1 to 12.

**Table 1 (Cord)**

| | Material | Raw yarn fineness (dtex) | Twist configuration | Twist factor (secondary/ primary) | Total fineness (dtex) | Diameter (mm) | Tensile strength (N) |
|---|---|---|---|---|---|---|---|
| Examples 1 to 3 | Aramid | 1670 | Lang twist/1 × 2 | 3.0/1.0 | 3340 | 0.70 | 620 |
| Comparative Examples 1 to 3 | Polyester | 1100 | Plied twist/2 × 3 | 3.0/3.0 | 6600 | 1.00 | 440 |
| Comparative Examples 4, 7, 10 | Aramid | 1670 | Plied twist/1 × 2 | 3.0/1.0 | 3340 | 0.71 | 620 |
| Comparative Examples 5, 8, 11 | Aramid | 1100 | Lang twist/2 × 3 | 3.0/1.0 | 6600 | 0.94 | 1300 |
| Comparative Examples 6, 9, 12 | Aramid | 1100 | Plied twist/2 × 3 | 3.0/1.0 | 6600 | 0.95 | 1300 |

### (Adhesion Treatment Method of Cord)

### (A) Preparation of First Treatment Agent

A polycarbodiimide dispersion liquid and water were mixed with an RFL solution having compositions shown in Table 2 in a proportion shown in Table 3, and the mixture was stirred at a room temperature for 10 minutes to prepare a first treatment agent having compositions shown in Table 3.

**Table 2 (RFL liquid)**

| Compounding agent (parts by mass) | Compounding amount | Solid content |
|---|---|---|
| Resorcinol | 20 | 20 |
| Water | 91.5 | - |
| 37 Mass% formalin | 13.5 | 5 |
| COOH-modified NBR | 263.2 | 100 |
| Water | 236.8 | - |
| Total | 625 | 125 |
| Concentration of total solid contents (mass%) | 20% | |

**Table 3 (First treatment agent)**

| Compounding agent (parts by mass) | | Compounding amount | Solid content |
|---|---|---|---|
| RFL liquid | COOH-modified NBR | 625 | 100 |
| | RF condensate | | 25 |
| Polycarbodiimide dispersion liquid | | 12.5 | 5 |
| Water | | 87.5 | - |
| Total | | 725 | 130 |
| Concentration of total solid contents (mass%) | | 18% | |

### (B) Preparation of Second Treatment Agent

The RFL solution having compositions shown in Table 2 and water were mixed in a proportion shown in Table 4, and the mixture was stirred at a room temperature for 10 minutes to prepare a second treatment agent having compositions shown in Table 4.

**Table 4 (Second treatment agent)**

| Compounding agent (parts by mass) | | Compounding amount | Solid content |
|---|---|---|---|
| RFL liquid | COOH-modified NBR | 625 | 100 |
| | RF condensate | | 25 |
| Water | | 1875 | - |
| Total | | 2500 | 125 |
| Concentration of total solid contents (mass%) | | 5% | |

### (C) Preparation of Third Treatment Agent

A rubber composition for adhesion rubber layer to be described later was dissolved in toluene in a proportion shown in Table 5, and a polymeric isocyanate was added to prepare a third treatment agent (rubber paste).

**Table 5 (Third treatment agent)**

| Composition (parts by mass) | |
|---|---|
| Rubber composition for adhesion rubber layer | 93 |
| Polymeric isocyanate | 7 |
| Toluene | 900 |
| Total | 1000 |

### (D) Adhesion Treatment

An untreated twisted yarn cord was immersed in the first treatment agent for 10 seconds and dried at 150°C for 2 minutes (first treatment step). Next, the twisted yarn cord treated with the first treatment agent was immersed in the second treatment agent for 10 seconds and dried at 230°C for 2 minutes (second treatment step). Finally, the twisted yarn cord treated with the second treatment agent was immersed in the third treatment agent for 3 seconds, and this immersion and drying treatment was repeated three times at 100°C for 1 minute, followed by being heat-treated at 230°C for 2 minutes to obtain the cord (third treatment step).

### (Reinforcing Fabric)

Canvas fabric (areal weight: 180 g/m²) was obtained by plain weaving 10-count cotton yarns with a yarn density of 70 yarns/50 mm. Treated canvas fabric (thickness: about 0.5 mm, areal weight: 450 g/m²) obtained by rubbing the rubber composition for adhesion rubber layer to the canvas fabric was used as the reinforcing fabric. The same reinforcing fabric was used for both the inner circumferential side and the outer circumferential side of the belt.

### [Belt Elongation Rigidity EA]

A belt as a test object was mounted on a sizing reel (belt length measuring machine) in which a pair of V-grooved pulleys with equal pitch diameters were disposed in an up-down direction, and a load was applied to the lower pulley in a direction where the two pulleys were separated from each other. In this case, belt tension (tension acting on one span of belt located between two pulleys) was half of the load applied to the lower pulley.

Specifically, a belt length at belt tension of 200 N was used as a reference length (belt length change rate of 0%), the belt tension was varied from 200 N to 600 N, and the belt length change rate with respect to the reference length was recorded. A measurement temperature was adjusted to 25°C.

Regarding a measurement result, a graph in which the belt length change rate (%) was defined as a horizontal axis and the belt tension (N) was defined as a vertical axis was created, values at five points where the belt tensions were 200 N, 300 N, 400 N, 500 N, and 600 N were linearly approximated, and a slope of the approximated line was defined as the belt elongation rigidity EA (unit: N). The elongation rigidity EA was expressed as a value per belt or as a value per 1 mm of pitch width obtained by dividing by the belt pitch width.

### [Belt Bending Rigidity EI]

By attaching, to an autograph, an upper plate 42 and a lower plate 43 for compressing the belt as a test object from the back, an annular belt 41 was placed between the upper and lower plates 42 and 43, as illustrated in FIG. 8. A distance between the plates was narrowed at a speed of 100 mm/min, and a compressive force (bending load) was measured and recorded at six points when pitch diameters D were 110 mm, 100 mm, 90 mm, 80 mm, 70 mm, and 60 mm, at a measurement temperature of 25°C. Based on measurement results, the bending rigidity EI at each of the six points was calculated using the following formula, and an average value (arithmetic mean) thereof was obtained.

$Bending rigidity EI = \left(compressive force\times {\left(pitch diameter D/2\right)}^{2}\right) / 2 \left(unit: N{\left(mm\right)}^{2}\right)$

The bending rigidity EI was expressed as a value per belt or as a value per 1 mm of pitch width obtained by dividing by the belt pitch width.

### [Durability Test 1 (Peeling Resistance Test)]

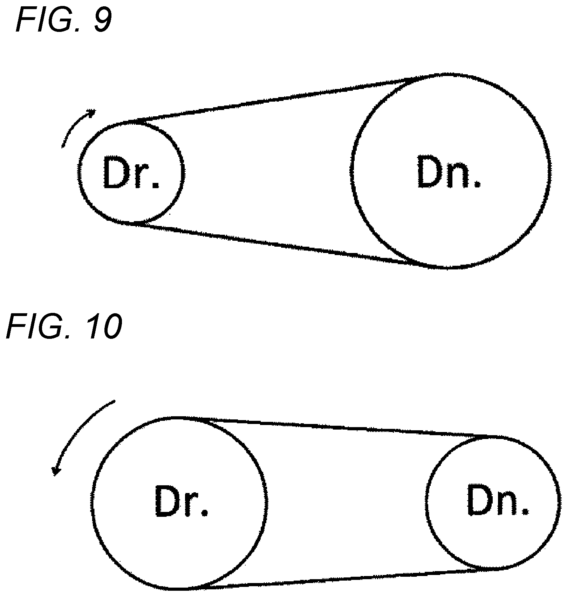

As illustrated in FIG. 9, a peeling resistance test was performed using a biaxial running test machine including a driving (Dr.) pulley having a diameter of 60 mm and a driven (Dn.) pulley having a diameter of 140 mm. The raw edge V-belt was wound around the two pulleys, and the belt ran at an ambient temperature of 80°C, an axial load of 700 N, a rotation speed of the driving pulley of 6000 rpm, and a torque of the driving pulley of 15 N·m. A time until peeling occurred on a lower side of the cord (inner circumferential side of belt) while measuring a side surface temperature of the belt during running with a non-contact thermometer ("THI-500" manufactured by Ichinen TASCO Co., Ltd.) was compared.

### [Durability Test 2 (Crack Resistance Test)]

As illustrated in FIG. 10, a crack resistance test was performed using a biaxial running test machine including a driving (Dr.) pulley having a diameter of 120 mm and a driven (Dn.) pulley having a diameter of 80 mm. The raw edge V-belt was wound around the two pulleys, and the belt ran at an ambient temperature of 120°C, an axial load of 400 N, a rotation speed of the driving pulley of 6000 rpm, and a torque of the driving pulley of 12 N·m. A time until a crack occurred on a cog valley while measuring a side surface temperature of the belt during running with a non-contact thermometer ("THI-500" manufactured by Ichinen TASCO Co., Ltd.) was compared.

### Example 1 and Comparative Examples 1 and 4 to 6

### (Formation of Rubber Layer)

The rubber compositions in Table 6 (adhesion rubber layer) and Table 7 (compression rubber layer and tension rubber layer) were subjected to rubber kneading by using a well-known method such as a Banbury mixer, and the kneaded rubber obtained was passed through a calendar roll to produce rolled rubber sheets (sheet for adhesion rubber layer, sheet for compression rubber layer, and sheet for tension rubber layer).

**Table 6 (Rubber composition for adhesion rubber layer)**

| Composition (parts by mass) | |
|---|---|
| Chloroprene rubber | 100 |
| Carbon black FEF | 30 |
| Silica | 20 |
| Naphthenic oil | 5 |
| Magnesium oxide | 4 |
| Anti-aging agent A | 4 |
| Zinc oxide | 5 |
| Crosslinking accelerator TMTD | 1 |
| Co-crosslinking agent | 2 |
| Stearic acid | 2 |
| Adhesiveness improver A | 1.5 |
| Adhesiveness improver B | 3.5 |
| Total | 178 |

**Table 7 (Rubber compositions for compression rubber layer and tension rubber layer)**

| Composition (parts by mass) | |
|---|---|
| Chloroprene rubber | 100 |
| Carbon black FEF | 50 |
| Magnesium oxide | 4 |
| Crosslinking accelerator MBTS | 1 |
| Anti-aging agent A | 4 |
| Anti-aging agent B | 2 |
| Anti-aging agent C | 2 |
| Zinc powder | 10 |
| Softening agent | 5 |
| Stearic acid | 2 |
| Zinc oxide | 5 |
| Co-crosslinking agent | 6 |
| Para-aramid short fiber | 15 |
| Nylon 66 short fiber | 10 |
| Total | 216 |

### (Production of Belt)

A laminated body of reinforcing fabric (lower fabric) and a sheet for compression rubber layer (uncrosslinked rubber) was placed, with the reinforcing fabric facing down, on a flat mold with a cog in which tooth portions and groove portions corresponding to the cog portions were alternately arranged. A cog pad (which was not completely crosslinked, but was in a semi-crosslinked state) molded with the cog portion was produced by pressing the laminated body at 75°C. Next, both ends of the cog pad were cut vertically from a top portion of a cog ridge portion.

Next, the cylindrical mold was covered with the inner mother mold in which the tooth portions and the groove portions corresponding to the cog portions were alternately arranged, and the cog pad was wound by engaging with the tooth portions and the groove portions of the inner mother mold to join at the top portion of the cog ridge portion. The first sheet for adhesion rubber layer (same as lower adhesion rubber, uncrosslinked rubber, and sheet for adhesion rubber layer) was laminated on the outer circumference of the wound cog pad, the cord was spun spirally, and the second sheet for adhesion rubber layer (same as upper adhesion rubber and sheet for adhesion rubber layer), the sheet for tension rubber layer (uncrosslinked rubber), and the reinforcing fabric (upper fabric) were wound around the outer circumference in sequence to produce an uncrosslinked molded product. The short fibers were oriented in the belt width direction. The cord pitch was 0.9 mm in Example 1 and Comparative Example 4, and 1.1 mm in Comparative Examples 1 and 5 to 6.

Thereafter, the uncrosslinked molded product was covered with a jacket, and the mold was placed in a vulcanization can, and crosslinking molding was performed at a temperature of 160°C for 20 minutes to obtain a belt sleeve. This belt sleeve was cut with a cutter into a V-shaped cross section of a predetermined width in the belt longitudinal direction. Then, this belt sleeve was finished into a belt having a structure illustrated in FIG. 2, that is, a raw edge cogged V-belt (size: upper width of 24 mm, thickness of 11 mm, V-angle of 30 degrees, outer circumferential length of 900 mm, pitch width of 23 mm), which is a variable speed belt having a cog on the inner circumferential side of the belt.

Evaluation results of the belts obtained in Example 1 and Comparative Examples 1 and 4 to 6 are shown in Table 8.

**Table 8**

| | | Example 1 | Comparative Example 1 | Comparative Example 4 | Comparative Example 5 | Comparative Example 6 |
|---|---|---|---|---|---|---|
| Fiber type of cord | | Aramid | Polyester | Aramid | Aramid | Aramid |
| Total fineness (dtex) of cord | | 3340 | 6600 | 3340 | 6600 | 6600 |
| Twist method of cord | | Lang twist | Plied twist | Plied twist | Lang twist | Plied twist |
| Elongation rigidity EA (N) per belt | | 216000 | 126000 | 220000 | 220000 | 224000 |
| Elongation rigidity EA (N) per 1 mm of pitch width | | 9400 | 5500 | 9600 | 9600 | 9800 |
| Bending rigidity EI (N (mm)²) per belt | | 5000 | 6870 | 5500 | 7270 | 8000 |
| Bending rigidity EI (N (mm)²) per 1 mm of pitch width | | 219 | 300 | 240 | 318 | 350 |
| Peeling resistance test | Side surface temperature (°C) of belt | 150 | 170 | 155 | 160 | 163 |
| | Time until occurrence of peeling (hrs) | 24 | 6 | 18 | 18 | 12 |
| Crack resistance test | Side surface temperature (°C) of belt | 128 | 135 | 130 | 132 | 133 |
| | Time until occurrence of cracking (hrs) | 168 | 96 | 144 | 120 | 96 |

### Example 2 and Comparative Examples 2 and 7 to 9

A raw edge double cogged V-belt (size: upper width of 25 mm, thickness of 10 mm, V-angle of 30 degrees, outer circumferential length of 900 mm, pitch width of 23 mm) was obtained in the same manner as in Example 1, except that while an outer circumference of a crosslinked molded product without the upper fabric was covered with an outer mother mold in which the tooth portions and the groove portions corresponding to the outer circumferential cog portions are alternately arranged, a jacket was covered, and crosslinking was conducted to produce a crosslinked belt sleeve with a cog portion formed on an outer circumferential surface. The cord pitch was 0.9 mm in Example 2 and Comparative Example 7, and 1.1 mm in Comparative Examples 2 and 8 to 9.

Evaluation results of the belts obtained in Example 2 and Comparative Examples 2 and 7 to 9 are shown in Table 9.

**Table 9**

| | | Example 2 | Comparative Example 2 | Comparative Example 7 | Comparative Example 8 | Comparative Example 9 |
|---|---|---|---|---|---|---|
| Fiber type of cord | | Aramid | Polyester | Aramid | Aramid | Aramid |
| Total fineness (dtex) of cord | | 3340 | 6600 | 3340 | 6600 | 6600 |
| Twist method of cord | | Lang twist | Plied twist | Plied twist | Lang twist | Plied twist |
| Elongation rigidity EA (N) per belt | | 201000 | 118000 | 205000 | 205000 | 209000 |
| Elongation rigidity EA (N) per 1 mm of pitch width | | 8800 | 5200 | 9000 | 9000 | 9100 |
| Bending rigidity EI (N (mm)²) per belt | | 5160 | 6730 | 5680 | 7510 | 8260 |
| Bending rigidity EI (N (mm)²) per 1 mm of pitch width | | 226 | 294 | 248 | 328 | 361 |
| Peeling resistance test | Side surface temperature (°C) of belt | 129 | 164 | 133 | 136 | 140 |
| | Time until occurrence of peeling (hrs) | 144 | 24 | 108 | 96 | 72 |
| Crack resistance test | Side surface temperature (°C) of belt | 129 | 139 | 132 | 134 | 136 |
| | Time until occurrence of cracking (hrs) | 168 | 72 | 120 | 96 | 72 |

### Example 3 and Comparative Examples 3 and 10 to 12

A raw edge double cogged V-belt (size: upper width of 25 mm, thickness of 9 mm, V-angle of 30 degrees, outer circumferential length of 900 mm, pitch width of 23 mm) was obtained in the same manner as in Example 1, except that while an outer circumference of a crosslinked molded product without the upper fabric was covered with an outer mother mold in which the tooth portions and the groove portions corresponding to the outer circumferential cog portions are alternately arranged, a jacket was covered, and crosslinking was conducted to produce a crosslinked belt sleeve with a cog portion formed on an outer circumferential surface. The cord pitch was 0.9 mm in Example 3 and Comparative Example 10, and 1.1 mm in Comparative Examples 3 and 11 to 12.

Evaluation results of the belts obtained in Example 3 and Comparative Examples 3 and 10 to 12 are shown in Table 10.

**Table 10**

| | | Example 3 | Comparative Example 3 | Comparative Example 10 | Comparative Example 11 | Comparative Example 12 |
|---|---|---|---|---|---|---|
| Fiber type of cord | | Aramid | Polyester | Aramid | Aramid | Aramid |
| Total fineness (dtex) of cord | | 3340 | 6600 | 3340 | 6600 | 6600 |
| Twist method of cord | | Lang twist | Plied twist | Plied twist | Lang twist | Plied twist |
| Elongation rigidity EA (N) per belt | | 224000 | 138000 | 228000 | 228000 | 233000 |
| Elongation rigidity EA (N) per 1 mm of pitch width | | 9800 | 6000 | 10000 | 10000 | 10200 |
| Bending rigidity EI (N (mm)²) per belt | | 2900 | 3940 | 3190 | 4220 | 4640 |
| Bending rigidity EI (N (mm)²) per 1 mm of pitch width | | 127 | 172 | 139 | 184 | 203 |
| Peeling resistance test | Side surface temperature (°C) of belt | 127 | 154 | 131 | 135 | 139 |
| | Time until occurrence of peeling (hrs) | 168 | 24 | 120 | 96 | 72 |
| Crack resistance test | Side surface temperature (°C) of belt | 126 | 132 | 128 | 130 | 131 |
| | Time until occurrence of cracking (hrs) | 192 | 144 | 168 | 144 | 120 |

As is clear from the results in Tables 8 to 10, in all types and sizes of belts, Examples using Lang-twisted cord using aramid fibers with a total fineness of 3500 dtex or less had higher elongation rigidity and lower bending rigidity than those of Comparative Examples. In addition, it could be confirmed that the belts in Examples maintained a low belt side-surface temperature, and had excellent peeling resistance and crack resistance.

Specifically, in Comparative Examples 1 to 3, the cord was formed of a polyester fiber, and since the total fineness was large and a twist method was plied twist, the bending rigidity was high, the belt temperature increased, and the durability was low.

In Comparative Examples 4, 7, and 10, since the twist method of the cord was plied twist, the bending rigidity was high, the belt temperature increased, and the durability was low.

In Comparative Examples 5, 8, and 11, since the total fineness of the cord was large, the bending rigidity was high, the belt temperature increased, and the durability was low.

In Comparative Examples 6, 9, and 12, since the total fineness of the cord was large and the twist method was plied twist, the bending rigidity was high, the belt temperature increased, and the durability was low.

### INDUSTRIAL APPLICABILITY

The V-belt for power-transmission of the present invention can be applied to a raw edge V-belt, a raw edge cogged V-belt having a cog portion, and the like, is particularly suitable for a V-belt (variable speed belt or CVT belt) used in a transmission (continuously variable transmission) in which a gear ratio changes continuously during belt running, for example, a raw edge cogged V-belt or a raw edge double cogged V-belt used for a continuously variable transmission of a motorcycle, an ATV (four-wheeled buggy), a snowmobile, or the like, and is especially suitable used for a raw edge cogged V-belt or a raw edge double cogged V-belt used in a continuously variable transmission of a scooter with small engine displacement (for example, 250cc or lower, preferably 160cc or lower).

Although the present invention has been described in detail with reference to specific embodiments, it is apparent to those skilled in the art that various modifications and changes can be made without departing from the spirit and scope of the present invention.

The present application is based on Japanese Patent Application No. 2023-215734 filed on December 21, 2023 and Japanese Patent Application No. 2024-206743 filed on November 27, 2024, and the content thereof is incorporated herein by reference.

### REFERENCE SIGNS LIST

1: raw edge cogged V-belt
11: raw edge double cogged V-belt
2, 6, 16: reinforcing fabric
3, 13: tension rubber layer
4, 14: tension member layer
4a, 14a: cord
5, 15: compression rubber layer

## Claims

1. A V-belt for power-transmission comprising a cord, wherein
the cord comprises a Lang-twisted cord obtained by combining a plurality of primary twisted yarns comprising an aramid fiber and subjecting the combined primary twisted yarns to secondary twist, and
the cord has a total fineness of 1000 dtex to 3500 dtex.

2. The V-belt for power-transmission according to claim 1, wherein
the cord has a tensile strength per cord of 500 N to 1000 N.

3. The V-belt for power-transmission according to claim 1 or 2, wherein
in the cord, the primary twisted yarns have a twist factor of 0.5 to 3, and the Lang-twisted cord has a twist factor of 0.5 to 5.

4. The V-belt for power-transmission according to any one of claims 1 to 3, wherein
a pitch of the cord is 0.05 mm to 0.25 mm larger than an average diameter of the cord.

5. The V-belt for power-transmission according to any one of claims 1 to 4, wherein
the cord has an average diameter of 0.4 mm to 1 mm.

6. The V-belt for power-transmission according to any one of claims 1 to 5, wherein
an elongation rigidity per 1 mm of a pitch width of the V-belt for power-transmission is 6500 N to 20000 N.

7. The V-belt for power-transmission according to any one of claims 1 to 6, wherein
a bending rigidity per 1 mm of a pitch width of the V-belt for power-transmission is 40 N(mm)² to 260 N(mm)².

8. The V-belt for power-transmission according to any one of claims 1 to 7, wherein
the V-belt for power-transmission has a thickness of 5 mm to 12 mm, and a pitch width of 10 mm to 25 mm.

9. The V-belt for power-transmission according to any one of claims 1 to 8, being a raw edge V-belt comprising a cog on at least an inner circumferential surface side.

10. The V-belt for power-transmission according to any one of claims 1 to 9, being a variable speed belt for a small belt continuously variable transmission.

11. A belt power-transmission system comprising:
the V-belt for power-transmission according to any one of claims 1 to 10; and
a pulley.

12. The belt power-transmission system according to claim 11, wherein
the V-belt for power-transmission is a raw edge V-belt comprising a cog on at least an inner circumferential surface side, and is a variable speed belt for a small belt continuously variable transmission.
